(19) Europäisches Patentamt
European Patent Office
Office européen des brevets

(11) **EP 4 721 996 A1**

(12) **EUROPEAN PATENT APPLICATION**

(43) Date of publication:
08.04.2026 Bulletin 2026/15

(21) Application number: 25201437.8

(22) Date of filing: **10.09.2025**

(51) International Patent Classification (IPC):
*B60C 3/04* (2006.01)  *B60C 9/20* (2006.01)
*B60C 9/22* (2006.01)  *B60C 11/00* (2006.01)
*B60C 19/00* (2006.01)

(52) Cooperative Patent Classification (CPC):
**B60C 11/005; B60C 3/04; B60C 9/2009;
B60C 9/22; B60C 11/0083; B60C 19/002;**
B60C 2011/0025; B60C 2200/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.10.2024 JP 2024173380**

(71) Applicant: **Sumitomo Rubber Industries, Ltd.
Kobe-shi, Hyogo 651-0072 (JP)**

(72) Inventor: **TATSUTA, Masahiro
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(54) **TIRE**

(57) A tire 2 includes a tire body 4 and a sound damper 6 joined to an inner surface of the tire body 4. The tire body 4 includes a tread 8 whose outer surface includes a crown portion 60, a pair of middle portions 62, and a pair of shoulder portions 64. An axially outer end PC of a joint surface between the sound damper 6 and the tire body 4 is located axially inward of a boundary MS between the middle and shoulder portions 62 and 64. A distance in an axial direction from an equator plane to the axially outer end PC is 90% or more of a distance in the axial direction from the equator plane to a boundary between the crown and middle portions 60 and 62. A radius TR1 of an arc representing a contour of the crown portion 60 is 1000 mm or more.

**Fig. 3**

# EP 4 721 996 A1

**Description**

BACKGROUND OF THE INVENTION

Field of the Invention

The present invention relates to a tire. Specifically, the present invention relates to a tire that is mounted to a passenger car.

Background Art

One type of noise generated when a tire runs is road noise. Air resonance vibration generated within the tire, that is, cavity resonance, is one of the causes of road noise.

A sound damper made of a sponge material is known as an item that can contribute to reducing road noise. The sound damper is provided inside the tire.

High speed running for a long time causes an increase in the internal temperature of the tire. The sound damper is a heat reservoir. The temperature of the portion to which the sound damper is joined tends to be higher than that of other portions. Providing the sound damper to the tire influences the high-speed durability of the tire.

Therefore, studies have been conducted to establish a technology that can suppress heat storage of a sound damper. For example, Japanese Laid-Open Patent Publication No. 2007-160979 proposes providing a heat dissipation recess in a sound damper in order to suppress heat storage of the sound damper.

An object of the present invention is to provide a tire that can achieve both quietness and high-speed durability.

SUMMARY OF THE INVENTION

A tire according to the present invention is a HIGH LOAD CAPACITY type tire specified in the ETRTO STANDARDS MANUAL 2021. The tire includes a tire body and a sound damper made of a sponge material. The tire body includes a tread configured to come into contact with a road surface and a belt located radially inward of the tread and including a large number of belt cords aligned with each other. The sound damper is joined to an inner surface of the tire body on a radially inner side of the tread. An outer surface of the tread includes a crown portion located at a center in an axial direction, a pair of middle portions located axially outward of the crown portion, and a pair of shoulder portions located axially outward of the middle portions, respectively. A distance in the axial direction from an equator plane of the tire to a boundary between the crown portion and the middle portion is 30% or more and 40% or less of a distance in the axial direction from the equator plane to an axially outer end of the tire. A distance in the axial direction from the equator plane to a boundary between the middle portion and the shoulder portion is 55% or more and 65% or less of the distance in the axial direction from the equator plane to the axially outer end of the tire. An axially outer end of a joint surface between the sound damper and the tire body is located axially inward of the boundary between the middle portion and the shoulder portion. A distance in the axial direction from the equator plane to the axially outer end of the joint surface is 90% or more of the distance in the axial direction from the equator plane to the boundary between the crown portion and the middle portion. In a meridian cross-section of the tire, a contour of the crown portion is represented by an arc having a center on the equator plane, a contour of each middle portion is represented by an arc tangent to the arc representing the contour of the crown portion, and a contour of each shoulder portion is represented by an arc tangent to the arc representing the contour of the middle portion. A radius TR1 of the arc representing the contour of the crown portion is larger than a radius TR2 of the arc representing the contour of the middle portion. The radius TR2 of the arc representing the contour of the middle portion is larger than a radius TR3 of the arc representing the contour of the shoulder portion. The radius TR1 of the arc representing the contour of the crown portion is 1000 mm or more.

According to the present invention, a tire that can achieve both quietness and high-speed durability is obtained.

BRIEF DESCRIPTION OF THE DRAWINGS

FIG. 1 is a cross-sectional view showing a part of a tire according to an embodiment of the present invention;
FIG. 2 is a cross-sectional view showing a part of the cross-section in FIG. 1; and
FIG. 3 is a cross-sectional view illustrating the contour of the outer surface of a tread.

DETAILED DESCRIPTION

Hereinafter, the present invention will be described in detail based on a preferred embodiment with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, unless otherwise specified, a load index (LI) is a load index for a HIGH LOAD CAPACITY type tire (hereinafter referred to as HLC type tire) specified in the ETRTO STANDARDS MANUAL 2021 and is an index representing a maximum mass allowed to be applied to the tire under specified conditions, that is, a maximum load capacity, as an index number.

In the present invention, a crosslinked rubber is a crosslinked product, of a rubber composition, which is obtained by pressurizing and heating the rubber composition. The rubber composition is a material obtained by mixing a rubber component and chemicals such as a filler in a kneading machine such as a Banbury mixer.

Examples of the rubber component include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a rubber component and chemicals, the amounts of the selected chemicals, etc., are determined as appropriate according to the specifications of components, such as a tread and a sidewall, for which the rubber composition is used.

In the present invention, the loss tangent (tan $\delta$) of a component formed from a crosslinked rubber, of the components included in the tire, is measured in accordance with the standards of JIS K6394 using a viscoelasticity spectrometer. The measurement conditions are as follows.

$$\text{Initial strain} = 10\%$$

$$\text{Dynamic strain} = \pm 1\%$$

$$\text{Frequency} = 10 \text{ Hz}$$

$$\text{Mode} = \text{tensile mode}$$

$$\text{Temperature} = 30^{\circ}\text{C}$$

In this measurement, a test piece (a length of 40 mm × a width of 4 mm × a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the loss tangent (tan δ) is represented as a loss tangent at 30°C.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

[Findings on Which Present Invention Is Based]

Electric vehicles are becoming increasingly widespread due to environmental considerations. Electric vehicles are equipped with batteries. Batteries enabling travelling for a distance of around 500 km are heavy. Electric vehicles tend to be heavier than conventional gasoline-powered vehicles. Thus, higher loads act on tires mounted on electric vehicles, than on tires mounted on gasoline-powered vehicles.

In order to provide tires that can support higher loads, the load index has been reviewed in the ETRTO standards, and a HIGH LOAD CAPACITY type (hereinafter referred to as HLC type) tire has been introduced as a new category.

To qualify a tire as an HLC type tire, the tire is required to be able to support a higher load than conventional tires.

As the load acting on a tire increases, the strain generated in the tire also increases. The strain promotes heat generation, so that in a tire on which a high load acts as in an HLC type tire, it is expected that the internal temperature of the tire will further increase.

A sound damper which is an item for reducing road noise is a heat reservoir as described above. If a sound damper is provided inside an HLC type tire, the temperature of the portion to which the sound damper is joined becomes excessively high, and as a result, the high-speed durability of the tire may be impaired.

Therefore, the present inventor has conducted a thorough study for a technology capable of suppressing heat generation of a tread portion to which a sound damper is provided, in order to achieve both quietness and high-speed durability, and thus has completed the invention described below.

[Outline of Embodiment of Present Invention]

The present invention is directed to a HIGH LOAD CAPACITY type tire specified in the ETRTO STANDARDS MANUAL 2021, the tire including a tire body and a sound damper made of a sponge material, wherein: the tire body includes a tread configured to come into contact with a road surface and a belt located radially inward of the tread and including a large number of belt cords aligned with each other; the sound damper is joined to an inner surface of the tire body on a radially inner side of the tread; an outer surface of the tread includes a crown portion located at a center in an axial direction, a pair of middle portions located axially outward of the crown portion, and a pair of shoulder portions located axially outward of the middle portions, respectively; a distance in the axial direction from an equator plane of the tire to a boundary between the crown portion and the middle portion is 30% or more and 40% or less of a distance in the axial direction from the equator plane to an axially outer end of the tire; a distance in the axial direction from the equator plane to a boundary between the middle portion and the shoulder portion is 55% or more and 65% or less of the distance in the axial direction from the equator plane to the axially outer end of the tire; an axially outer end of a joint surface between the sound damper and the tire body is located axially inward of the boundary between the middle portion and the shoulder portion; a distance in the axial direction from the equator plane to the axially outer end of the joint surface is 90% or more of the distance in the axial direction from the equator plane to the boundary between the crown portion and the middle portion; in a meridian cross-section of the tire, a contour of the crown portion is represented by an arc having a center on the equator plane, a contour of each middle portion is represented by an arc tangent to the arc representing the contour of the crown portion, and a contour of each shoulder portion is represented by an arc tangent to the arc representing the contour of the middle portion; a radius TR1 of the arc representing the contour of the crown portion is larger than a radius TR2 of the arc representing the contour of the middle portion; the radius TR2 of the arc representing the contour of the middle portion is larger than a radius TR3 of the arc representing the contour of the shoulder portion; and the radius TR1 of the arc representing the contour of the crown portion is 1000 mm or more.

The tire of the present invention can achieve both quietness and high-speed durability. The mechanism by which this effect is achieved has not been clarified but is inferred as follows.

An HLC type tire is used under high loads. Compared to a tire that is used under normal loads, the input to the tire through a tread thereof is larger. The cavity resonance generated within the tire may increase, leading to increased road noise. However, the tire of the present invention includes the sound damper made of a sponge material. Since the sound damper suppresses cavity resonance, an increase in road noise is suppressed. This tire can maintain good quietness.

As described above, if a sound damper is provided inside an HLC type tire, the temperature of the portion to which the sound damper is joined becomes excessively high, and as a result, the high-speed durability of the tire may be impaired. However, in the tire of the present invention, the contour of the crown portion is represented by an arc having a radius of 1000 mm or more. The crown portion is composed of a flat surface. This tire can reduce a ground-contact pressure at the crown portion. The mechanical fatigue of the tread is reduced, so that this tire can maintain good high-speed durability.

Furthermore, in this tire, the position of the axially outer end of the joint surface between the sound damper and the tire body is set in consideration of the boundary position between the crown portion and the middle portion, so that the sound damper can effectively reduce road noise and a local increase in temperature is suppressed. This tire can suppress a decrease in high-speed durability while maintaining good quietness.

In this tire, the axially outer end of the joint surface between the sound damper and the tire body is located axially inward of the boundary between the middle portion and the shoulder portion. This tire can inhibit the sound damper from promoting heat generation of the shoulder portion which easily generates heat. This tire can maintain good high-speed durability.

This tire can sufficiently exhibit the road noise reduction effect of the sound damper while suppressing a decrease in high-speed durability due to the provision of the sound damper. This tire can achieve both quietness and high-speed durability.

Preferably, a ratio TR2/TR1 of the radius TR2 of the arc representing the contour of the middle portion to the radius TR1 of the arc representing the contour of the crown portion is 0.45 or more and 0.55 or less. Accordingly, the outer surface of the tread can effectively contribute to reducing the ground-contact pressure at the crown portion. The mechanical fatigue of the tread is effectively reduced, so that this tire can maintain good high-speed durability.

More preferably, a ratio TR3/TR1 of the radius TR3 of the arc representing the contour of the shoulder portion to the radius TR1 of the arc representing the contour of the crown portion is 0.05 or more and 0.15 or less. Accordingly, the outer surface of the tread can more effectively contribute to reducing the ground-contact pressure at the crown portion. The mechanical fatigue of the tread is more effectively reduced, so that this tire can maintain good high-speed durability.

Preferably, the tread includes a cap layer, an intermediate layer located radially inward of the cap layer, and a base layer located radially inward of the intermediate layer, and a loss tangent of the intermediate layer at 30°C is lower than a loss tangent of the cap layer at 30°C and is higher than a loss tangent of the base layer at 30°C. Accordingly, heat generation in the tread is effectively suppressed. This tire can maintain good high-speed durability.

Preferably, the tire further includes a band located between the tread and the belt in a radial direction, and the band includes a band cord extending substantially in a circumferential direction. Accordingly, the band constrains the belt. Vibration of the belt is suppressed, so that heat generation in the tread is effectively suppressed. This tire can maintain good high-speed durability.

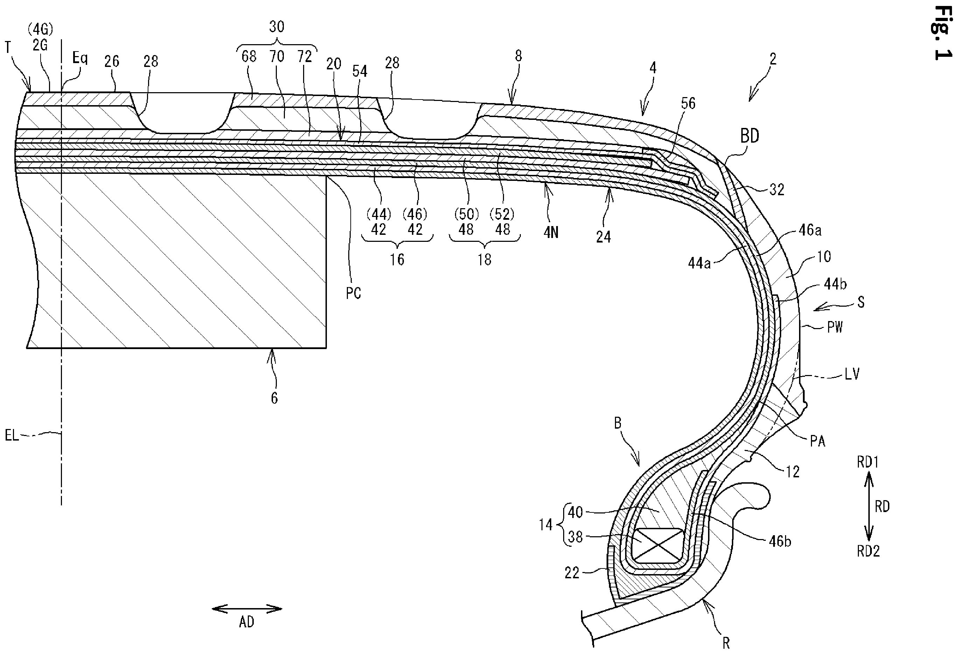

As described above, the tire of the present invention can achieve both quietness and high-speed durability. This will be described in detail below with a tire shown in FIG. 1 as an example.

[Details of Embodiment of Present Invention]

FIG. 1 shows a part of a tire 2 according to one embodiment of the present invention. The tire 2 is a pneumatic tire for a passenger car. The tire 2 is a HIGH LOAD CAPACITY type tire specified in the ETRTO STANDARDS MANUAL 2021. The tire 2 shown in FIG. 1 is fitted on a rim R (standardized rim).

FIG. 1 shows a part of a cross-section, of the tire 2, along a plane including the rotation axis (not shown) of the tire 2. The cross-section shown in FIG. 1 is also referred to as meridian cross-section.

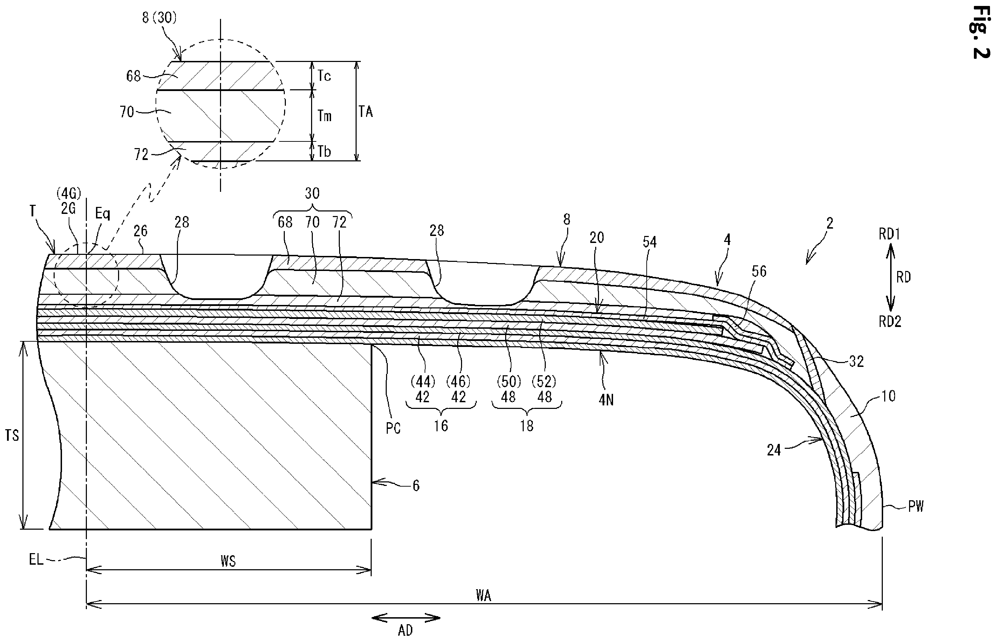

A direction indicated by a double-headed arrow AD is the axial direction of the tire 2. The axial direction of the tire 2 means a direction parallel to the rotation axis of the tire 2. A direction indicated by a double-headed arrow RD is the radial direction of the tire 2. A direction perpendicular to the drawing sheet of FIG. 1 is the circumferential direction of the tire 2. An alternate long and short dash line EL extending in the radial direction represents the equator plane of the tire 2. FIG. 2 shows a part of the cross-section shown in FIG. 1. FIG. 2 shows a tread portion T of the tire 2.

In the axial direction, a direction away from the equator plane EL corresponds to the axially outer side of the tire 2, and a direction approaching the equator plane EL corresponds to the axially inner side of the tire 2. A direction indicated by an arrow RD1 corresponds to the radially outer side of the tire 2, and a direction indicated by an arrow RD2 corresponds to the radially inner side of the tire 2.

In FIG. 1, a position indicated by reference character Eq is the point of intersection of an outer surface 2G of the tire 2 (specifically, a tread surface described later) and the equator plane EL. The point of intersection Eq is the equator of the tire 2.

In the case where a groove is located on the equator plane EL, the equator Eq is specified on the basis of a virtual outer surface obtained on the assumption that no groove is provided thereon. The equator Eq is the radially outer end of the tire 2.

In FIG. 1, a position indicated by reference character PW is an axially outer end (hereinafter referred to as outer end PW) of the tire 2. In the case where decorations such as patterns and letters are present on the outer surface 2G, the outer end PW is specified based on a virtual outer surface obtained on the assumption that the decorations are not present thereon (an alternate long and two short dashes line LV in FIG. 1).

In FIG. 2, a length indicated by a double-headed arrow WA is the distance in the axial direction from the equator plane EL to the axially outer end PW of the tire 2. Twice the distance WA in the axial direction is the cross-sectional width (see JATMA or the like) of the tire 2. The cross-sectional width of the tire 2 is also the maximum width of the tire 2. The axially outer end PW is also referred to as maximum width position PW.

The tire 2 includes a tire body 4 and a sound damper 6. Although not described in detail, the tire body 4 is obtained by vulcanizing a rubber composition for a green tire in a mold. The tire 2 is obtained by joining the sound damper 6 to an inner surface 4N of the tire body 4. An outer surface 4G of the tire body 4 corresponds to the outer surface 2G of the tire 2.

The tire body 4 includes a tread 8, a pair of sidewalls 10, a pair of clinches 12, a pair of beads 14, a carcass 16, a belt 18, a band 20, a pair of chafers 22, and an inner liner 24.

The tread 8 is located radially outward of the carcass 16. The tread 8 is formed from a crosslinked rubber. The tread 8 comes into contact with a road surface at a tread surface 26 thereof. The tread 8 has the tread surface 26 that comes into contact with a road surface. The outer surface 2G of the tire 2 includes the tread surface 26.

Grooves 28 are formed in the tread 8. Accordingly, a tread pattern is formed.

The tread 8 has a tread body 30 and a pair of wings 32.

The tread body 30 is formed from a crosslinked rubber. The tread body 30 mainly comes into contact with a road surface.

Each wing 32 is located between the tread body 30 and the sidewall 10. The tread body 30 and the sidewall 10 are joined via the wing 32. The wing 32 is formed from a crosslinked rubber for which adhesiveness is taken into consideration.

Each sidewall 10 is connected to the tread 8. The sidewall 10 is located axially outward of the carcass 16. The sidewall 10 is formed from a crosslinked rubber for which cut resistance is taken into consideration.

Each clinch 12 is located radially inward of the sidewall 10. The clinch 12 comes into contact with the rim R. The clinch 12 is formed from a crosslinked rubber for which wear resistance is taken into consideration.

Each bead 14 is located radially inward of the sidewall 10. The bead 14 is located axially inward of the clinch 12.

The bead 14 includes a core 38 and an apex 40. The core 38 extends in the circumferential direction. The core 38 includes a steel wire which is not shown. The apex 40 is located radially outward of the core 38. The apex 40 is formed from a crosslinked rubber that has high stiffness. The apex 40 is tapered outward in the radial direction. A position indicated by reference character PA is the outer end of the apex 40. The outer end PA of the apex 40 is located radially inward of the axially outer end PW of the tire 2. The outer end PA of the apex 40 is also the outer end of the bead 14.

The carcass 16 is located inward of the tread 8, the pair of sidewalls 10, and the pair of clinches 12. The carcass 16 extends on and between the pair of beads 14.

The carcass 16 includes at least one carcass ply 42. The carcass 16 of the tire 2 is composed of two carcass plies 42. Of the two carcass plies 42, the carcass ply 42 located on the inner side on the radially inner side of the tread 8 is a first carcass ply 44, and the carcass ply 42 located on the outer side on the radially inner side of the tread 8 is a second carcass ply 46.

The first carcass ply 44 is turned up from the inner side to the outer side in the axial direction at each bead 14. The first carcass ply 44 includes a first ply body 44a and a pair of first turned-up portions 44b. The first ply body 44a extends between the pair of beads 14. The respective first turned-up portions 44b are connected to the first ply body 44a and turned up at the respective beads 14. An end of each first turned-up portion 44b is located radially outward of the axially outer end PW of the tire 2.

The second carcass ply 46 is turned up from the inner side to the outer side in the axial direction at each bead 14. The second carcass ply 46 includes a second ply body 46a and a pair of second turned-up portions 46b. The second ply body 46a extends between the pair of beads 14. The respective second turned-up portions 46b are connected to the second ply body 46a and turned up at the respective beads 14. An end of each second turned-up portion 46b is located radially inward of the outer end PA of the apex 40. The end of each second turned-up portion 46b is covered with the first turned-up portion 44b.

Each carcass ply 42 constituting the carcass 16 includes a large number of carcass cords aligned with each other, which are not shown. The carcass cords intersect the equator plane EL. The carcass 16 of the tire 2 has a radial structure. The carcass cords are cords formed from an organic fiber (hereinafter referred to as organic fiber cords). Examples of the organic fiber include nylon fibers, rayon fibers, polyester fibers, and aramid fibers.

The belt 18 is located radially inward of the tread 8. The belt 18 is located radially outward of the carcass 16. The belt 18 of the tire 2 is stacked on the carcass 16 on the radially inner side of the tread 8.

The belt 18 includes a plurality of belt plies 48 aligned in the radial direction. The plurality of belt plies 48 include an inner belt ply 50 located on the innermost side and an outer belt ply 52 located on the outermost side. The belt 18 of the tire 2 is composed of two belt plies 48, specifically the inner belt ply 50 and the outer belt ply 52.

The inner belt ply 50 is stacked on the carcass 16 on the radially inner side of the tread 8. The outer belt ply 52 is stacked on the inner belt ply 50.

Each end of the outer belt ply 52 is located axially inward of an end of the inner belt ply 50. The outer belt ply 52 is narrower than the inner belt ply 50. Each end of the inner belt ply 50 is an end of the belt 18.

Each belt ply 48 constituting the belt 18 includes a large number of belt cords aligned with each other, which are not shown. Each belt cord is inclined with respect to the equator plane EL. The direction of inclination of the belt cords included in the outer belt ply 52 is opposite to the direction of inclination of the belt cords included in the inner belt ply 50. The belt cords are steel cords.

The band 20 is stacked on the belt 18 on the inner side of the tread 8. The band 20 is located between the tread 8 and the belt 18 in the radial direction. Each end of the band 20 is located axially outward of the end of the belt 18. The band 20 covers the belt 18.

The band 20 includes a helically wound band cord which is not shown. In the band 20, the band cord extends substantially in the circumferential direction. Specifically, an angle of the band cord with respect to the circumferential direction is 5° or less. The band 20 has a jointless structure.

Each chafer 22 is located radially inward of the bead 14. The chafer 22 comes into contact with the rim R. The chafer 22 of the tire 2 includes a fabric and a rubber with which the fabric is impregnated.

The inner liner 24 is located inward of the carcass 16. The inner liner 24 forms the inner surface 4N of the tire body 4. The inner liner 24 is formed from a crosslinked rubber that has an excellent air blocking property. The inner liner 24 maintains the internal pressure of the tire 2.

The sound damper 6 is joined to the inner surface 4N of the tire body 4 on the radially inner side of the tread 8. In FIG. 2, a position indicated by reference character PC is an axially outer end of the joint surface between the sound damper 6 and the tire body 4. A length indicated by a double-headed arrow WS is the distance in the axial direction from the equator plane EL to the axially outer end PC of the joint surface between the sound damper 6 and the tire body 4. A length indicated by a double-headed arrow TS is the thickness of the sound damper 6. The thickness TS of the sound damper 6 is measured along the equator plane EL.

The sound damper 6 is made of a sponge material. The sponge material is a sponge-like porous structure. Examples of the sponge material include a so-called sponge itself obtained by foaming a rubber or a synthetic resin and having open cells, and a web-like material made of animal fibers, plant fibers, synthetic fibers, or the like intertwined and linked together. The "porous structure" also includes not only a structure having open cells but also a structure having closed cells. The sound damper 6 of the tire 2 is made of a sponge material having open cells and made of foamed polyurethane.

In the tire 2, synthetic resin sponges such as an ether-based polyurethane sponge, an ester-based polyurethane sponge, and a polyethylene sponge, and rubber sponges such as a chloroprene rubber sponge (CR sponge), an ethylene-propylene rubber sponge (EDPM sponge), and an acrylonitrile butadiene rubber sponge (NBR sponge) are suitable for use as the sponge material. From the viewpoint of sound-damping properties, lightness, foam adjustability, durability, etc., polyurethane-based sponges including an ether-based polyurethane sponge, or polyethylene sponges are preferable.

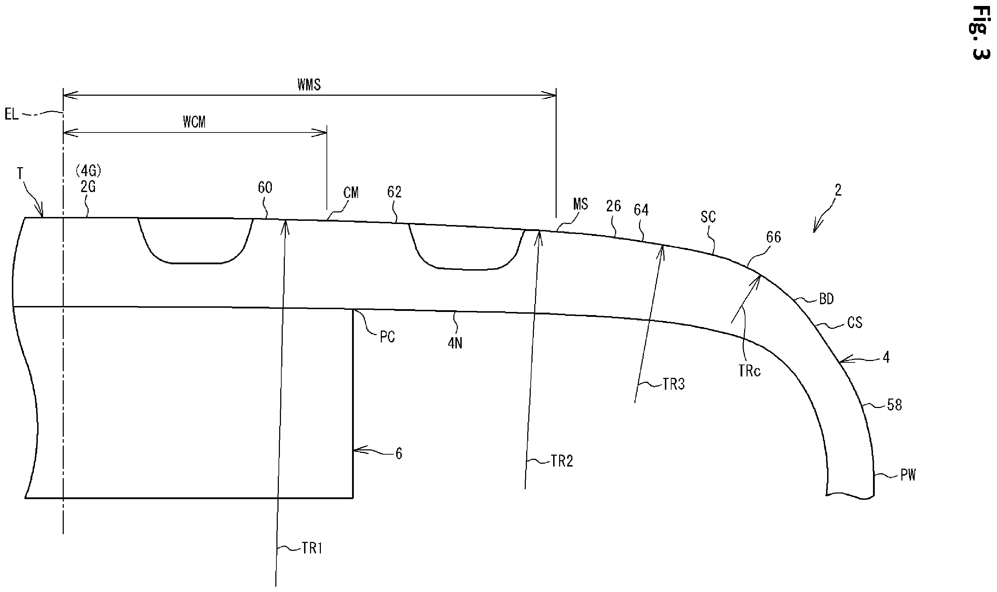

FIG. 3 shows a part of the contour line of the outer surface 2G of the tire 2 in the meridian cross-section. The contour line of the outer surface 2G is represented by a virtual outer surface obtained on the assumption that no grooves and no decorations such as patterns and letters are present thereon. Although not described in detail, in the present invention, the contour line of the outer surface 2G is obtained by measuring the outer surface shape of the tire 2 in the standardized state, for example, using a displacement sensor.

The outer surface 2G of the tire 2 includes the tread surface 26 and a pair of side surfaces 58 connected to the tread surface 26. The tread surface 26 is divided into seven parts aligned in the axial direction. The tread surface 26 includes a crown portion 60, a pair of middle portions 62, a pair of shoulder portions 64, and a pair of corner portions 66 as the seven parts.

The crown portion 60 is located at the center in the axial direction. The pair of middle portions 62 are each located axially outward of the crown portion 60. A position indicated by reference character CM is the boundary between the crown portion 60 and the middle portion 62. The pair of shoulder portions 64 are each located axially outward of the middle portion 62. A position indicated by reference character MS is the boundary between the middle portion 62 and the shoulder portion 64. The pair of corner portions 66 are each located axially outward of the shoulder portion 64. A position indicated by reference character SC is the boundary between the shoulder portion 64 and the corner portion 66.

The crown portion 60 is a part located at the center in the axial direction. Each corner portion 66 is a part located on the outermost side in the axial direction. Each middle portion 62 and each shoulder portion 64 are parts located between the crown portion 60 and the corner portion 66.

As described above, each corner portion 66 is a part located on the outermost side in the axial direction. The corner portion 66 is connected to the side surface 58. A position indicated by reference character CS is the boundary between the corner portion 66 and the side surface 58. The boundary CS is also an end of the tread surface 26.

In FIG. 3, a position indicated by reference character BD is the boundary between the tread 8 and the sidewall 10 on the outer surface 2G of the tire 2, that is, the boundary between the outer surface of the tread 8 and the outer surface of the sidewall 10. In the tire 2, the outer surface of the tread 8 is included in the tread surface 26. The outer surface of the tread 8 includes a part of each corner portion 66. The outer surface 2G of the tire 2 may be formed such that the boundary BD between the outer surface of the tread 8 and the outer surface of the sidewall 10 coincides with the end CS of the tread surface 26.

In FIG. 3, a double-headed arrow WCM indicates the distance in the axial direction from the equator plane EL to the boundary CM between the crown portion 60 and the middle portion 62. A double-headed arrow WMS indicates the distance in the axial direction from the equator plane EL to the boundary MS between the middle portion 62 and the shoulder portion 64.

In the tire 2, in the meridian cross-section thereof, each of the contours of the crown portion 60, each middle portion 62, each shoulder portion 64, and each corner portion 66 is represented by an arc.

The contour of the crown portion 60 is represented by an arc having a center on the equator plane EL. In FIG. 3, an arrow TR1 indicates the radius of the arc representing the contour of the crown portion 60.

The contour of each middle portion 62 is represented by an arc tangent to the arc representing the contour of the crown portion 60. In FIG. 3, an arrow TR2 indicates the radius of the arc representing the contour of the middle portion 62. The arc representing the contour of the middle portion 62 is tangent to the arc representing the contour of the crown portion 60, at the boundary CM. The boundary CM is the tangent point between the arc representing the contour of the middle portion 62 and the arc representing the contour of the crown portion 60.

The contour of each shoulder portion 64 is represented by an arc tangent to the arc representing the contour of the middle portion 62. In FIG. 3, an arrow TR3 indicates the radius of the arc representing the contour of the shoulder portion 64. The arc representing the contour of the shoulder portion 64 is tangent to the arc representing the contour of the middle portion 62, at the boundary MS. The boundary MS is the tangent point between the arc representing the contour of the shoulder portion 64 and the arc representing the contour of the middle portion 62.

The contour of each corner portion 66 is represented by an arc tangent to the arc representing the contour of the shoulder portion 64. In FIG. 3, an arrow TRc indicates the radius of the arc representing the contour of the corner portion 66. The arc representing the contour of the corner portion 66 is tangent to the arc representing the contour of the shoulder portion 64, at the boundary SC. The boundary SC is the tangent point between the arc representing the contour of the corner portion 66 and the arc representing the contour of the shoulder portion 64. The arc representing the contour of the corner portion 66 is tangent to a contour line of the side surface 58 at the boundary CS. The boundary CS is the tangent point between the arc representing the contour of the corner portion 66 and the contour line of the side surface 58.

In the tire 2, the radius TR1 of the arc representing the contour of the crown portion 60 is larger than the radius TR2 of the arc representing the contour of the middle portion 62. The radius TR2 of the arc representing the contour of the middle portion 62 is larger than the radius TR3 of the arc representing the contour of the shoulder portion 64. The radius TR3 of the arc representing the contour of the shoulder portion 64 is larger than the radius TRc of the arc representing the contour of the corner portion 66.

Among the seven parts constituting the tread surface 26, the arc representing the contour of the crown portion 60 located at the center in the axial direction has the largest radius TR1, and the arc representing the contour of the corner portion 66 located on each outermost side in the axial direction has the smallest radius TRc. Of two parts adjacent to each other in the axial direction, the arc representing the contour of the part located on the axially outer side has a radius smaller than the radius of the arc representing the contour of the part located axially inward of this part. The radius TRc is smaller than the radius TR1. Specifically, the ratio TRc/TR1 of the radius TRc to the radius TR1 is 0.010 or more and 0.020 or less.

As described above, the sound damper 6 is made of a sponge material and is joined to the inner surface 4N of the tire body 4 on the radially inner side of the tread 8.

The sound damper 6 made of a sponge material reduces sound (cavity resonance energy) by its surface and inner porous portions converting the vibration energy of vibrating air into heat energy to consume the vibration energy. The sound damper 6 suppresses cavity resonance, so that an increase in road noise is suppressed. Since the sound damper 6 is made of a sponge material, the sound damper 6 is easily deformed, for example, easily contracted and bent. Therefore, the sound damper 6 does not substantially influence deformation of the tire 2. As a result, the tire 2 can maintain good steering stability.

The radius TR1 of the arc representing the contour of the crown portion 60 is 1000 mm or more. The crown portion 60 is composed of a flat surface. The tire 2 can reduce a ground-contact pressure at the crown portion 60. The mechanical fatigue of the tread 8 is reduced, so that the tire 2 can maintain good high-speed durability. From this viewpoint, the radius TR1 of the arc representing the contour of the crown portion 60 is preferably 1300 mm or more and more preferably 1500 mm or more. From the viewpoint that the crown portion 60 is recessed radially inward and an excessive increase in a ground-contact pressure at each shoulder portion 64 is suppressed, the radius TR1 is preferably 3000 mm or less and more preferably 2500 mm or less.

In the tire 2, the distance WCM in the axial direction from the equator plane EL to the boundary CM between the crown portion 60 and the middle portion 62 is 30% or more and 40% or less of the distance WA in the axial direction from the equator plane EL to the axially outer end PW of the tire 2, and the distance WS in the axial direction from the equator plane EL to the axially outer end PC of the joint surface is 90% or more of the above-described distance WCM in the axial direction. In the tire 2, the position of the axially outer end PC of the joint surface between the sound damper 6 and the tire body 4 is set in consideration of the boundary position between the crown portion 60 and the middle portion 62, so that the sound damper 6 can effectively reduce road noise and a local increase in temperature is suppressed. The tire 2 can suppress a decrease in high-speed durability while maintaining good quietness. From this viewpoint, the ratio WS/WCM of the distance WS in the axial direction to the distance WCM in the axial direction is preferably 120% or more.

In the tire 2, the distance WMS in the axial direction from the equator plane EL to the boundary MS between the middle portion 62 and the shoulder portion 64 is 55% or more and 65% or less of the distance WA in the axial direction from the equator plane EL to the axially outer end PW of the tire 2, and the axially outer end PC of the joint surface is located axially inward of the boundary MS between the middle portion 62 and the shoulder portion 64. The tire 2 can inhibit the sound damper 6 from promoting heat generation of the shoulder portion 64 which easily generates heat. The tire 2 can maintain good high-speed durability. From this viewpoint, the ratio WS/WMS of the distance WS in the axial direction from the equator plane EL to the axially outer end PC of the joint surface to the above-described distance WMS in the axial direction is preferably 99% or less and more preferably 82% or less.

The tire 2 can sufficiently exhibit the road noise reduction effect of the sound damper 6 while suppressing a decrease in high-speed durability due to the provision of the sound damper 6. The tire 2 can achieve both quietness and high-speed durability.

In the tire 2, the distance WS in the axial direction from the equator plane EL to the axially outer end PC of the joint surface is 90% or more of the above-described distance WCM in the axial direction, and the axially outer end PC of the joint surface is located axially inward of the boundary MS between the middle portion 62 and the shoulder portion 64. The tire 2 can suppress heat generation as a whole. The tire 2 can achieve both quietness and high-speed durability while maintaining low rolling resistance.

The thickness TS of the sound damper 6 is preferably 20 mm or more and 40 mm or less.

When the thickness TS of the sound damper 6 is set to 20 mm or more, the sound damper 6 can contribute to reducing road noise. The tire 2 has good quietness. From this viewpoint, the thickness TS of the sound damper 6 is more preferably 25 mm or more.

When the thickness TS of the sound damper 6 is set to 40 mm or less, an increase in temperature due to the sound damper 6 is suppressed. The tire 2 has good high-speed durability. From this viewpoint, the thickness TS of the sound damper 6 is more preferably 35 mm or less.

As described above, the radius TR1 of the arc representing the contour of the crown portion 60 is larger than the radius TR2 of the arc representing the contour of the middle portion 62. Specifically, the ratio TR2/TR1 of the radius TR2 of the arc representing the contour of the middle portion 62 to the radius TR1 of the arc representing the contour of the crown portion 60 is preferably 0.45 or more and 0.55 or less. Accordingly, the tread surface 26 can effectively contribute to reducing the ground-contact pressure at the crown portion 60. The mechanical fatigue of the tread 8 is effectively reduced, so that the tire 2 can maintain good high-speed durability. From this viewpoint, the ratio TR2/TR1 is more preferably 0.47 or more and 0.53 or less.

As described above, the radius TR2 of the arc representing the contour of the middle portion 62 is larger than the radius TR3 of the arc representing the contour of the shoulder portion 64. Since the radius TR1 of the arc representing the contour of the crown portion 60 is larger than the radius TR2 of the arc representing the contour of the middle portion 62, the radius TR3 of the arc representing the contour of the shoulder portion 64 is smaller than the radius TR1 of the arc representing the contour of the crown portion 60. Specifically, the ratio TR3/TR1 of the radius TR3 of the arc representing the contour of the shoulder portion 64 to the radius TR1 of the arc representing the contour of the crown portion 60 is preferably 0.05 or more and 0.15 or less. Accordingly, the tread surface 26 can more effectively contribute to reducing the ground-contact pressure at the crown portion 60. The mechanical fatigue of the tread 8 is more effectively reduced, so that the tire 2 can maintain good high-speed durability. From this viewpoint, the ratio TR3/TR1 is more preferably 0.07 or more and 0.13 or less.

As described above, the band 20 of the tire 2 is located between the tread 8 and the belt 18 in the radial direction and includes the band cord extending substantially in the circumferential direction. The band 20 constrains the belt 18. Accordingly, vibration of the belt 18 is suppressed. Heat generation in the tread 8 is effectively suppressed. The tire 2 can maintain good high-speed durability. From this viewpoint, it is preferable that the tire 2 further includes the band 20 located between the tread 8 and the belt 18 in the radial direction and the band 20 includes the band cord extending substantially in the circumferential direction.

The band cord of the tire 2 is an organic fiber cord. Examples of the organic fiber include nylon fibers, rayon fibers, polyester fibers, and aramid fibers. As the band cord, a hybrid cord obtained by twisting together two types of filaments made of organic fibers and having different stiffnesses may be used. Examples of the hybrid cord include a hybrid cord of a polyester fiber and a nylon fiber, a hybrid cord of an aramid fiber and a polyester fiber, and a hybrid cord of an aramid fiber and a nylon fiber.

In the tire 2, a hybrid cord is preferred as the band cord. Accordingly, the band 20 can effectively constrain the belt 18. Vibration of the belt 18 is suppressed, so that heat generation in the tread 8 is effectively suppressed. The tire 2 can maintain good high-speed durability. From this viewpoint, in the case where the band cord is a hybrid cord, this band cord is preferably a hybrid cord of an aramid fiber and a nylon fiber.

The band 20 of the tire 2 includes a full band 54 and a pair of edge bands 56.

The full band 54 covers the entirety of the belt 18. The pair of edge bands 56 are placed so as to be spaced apart from each other in the axial direction with the equator plane EL located therebetween. Each edge band 56 is located radially outward of the full band 54. The edge band 56 covers an end of the full band 54. The band 20 may be composed only of the full band 54.

The band 20 including the full band 54 and the pair of edge bands 56 effectively constrains the belt 18 compared to the case where the band 20 is composed only of the full band 54. Vibration of the belt 18 is sufficiently suppressed. Heat generation in the tread 8 is more effectively suppressed. The tire 2 can maintain good high-speed durability. From this viewpoint, it is preferable that the band 20 includes the full band 54 and the pair of edge bands 56.

The tread 8 of the tire 2, specifically the tread body 30, includes a cap layer 68, an intermediate layer 70, and a base layer 72. The cap layer 68 constitutes a radially outer portion of the tread body 30. The base layer 72 constitutes a radially inner portion of the tread body 30. The intermediate layer 70 is located radially inward of the cap layer 68, and the base layer 72 is located radially inward of the intermediate layer 70. The tread body 30 is composed of three layers that are the cap layer 68, the intermediate layer 70, and the base layer 72 aligned in the radial direction. The tread 8 is also referred to as three-layer tread. The tread body 30 may be composed of two layers that are the cap layer 68 and the base layer 72 aligned in the radial direction. In this case, the tread 8 is also referred to as two-layer tread.

The three layers, that is, the cap layer 68, the intermediate layer 70, and the base layer 72, each have a thickness that is generally uniform in the axial direction. In FIG. 2, a double-headed arrow Tc indicates the thickness of the cap layer 68. A double-headed arrow Tm indicates the thickness of the intermediate layer 70. A double-headed arrow Tb indicates the thickness of the base layer 72. A double-headed arrow TA indicates the thickness of the tread 8. The thickness Tc, the thickness Tm, the thickness Tb, and the thickness TA are measured along the equator plane EL. In the case where a groove 28 is provided on the equator plane EL, the thickness Tc, the thickness Tm, the thickness Tb, and the thickness TA are measured along the normal line of the tread surface 26 at the width center of a land portion adjacent to the groove 28 on the equator plane EL.

In the tire 2, the ratio Tc/TA of the thickness Tc of the cap layer 68 to the thickness TA of the tread 8 is 0.2 or more and 0.4 or less. The ratio Tm/TA of the thickness Tm of the intermediate layer 70 to the thickness TA of the tread 8 is 0.4 or more and 0.6 or less. The ratio Tb/TA of the thickness Tb of the base layer 72 to the thickness TA of the tread 8 is 0.1 or more and 0.3 or less. In the case where the tread 8 is a two-layer tread, the ratio Tc/TA of the thickness Tc of the cap layer 68 to the thickness TA of the tread 8 is 0.7 or more and 0.9 or less. The ratio Tb/TA of the thickness Tb of the base layer 72 to the thickness TA of the tread 8 is 0.1 or more and 0.3 or less.

In the tire 2, a loss tangent LTm of the intermediate layer 70 at 30°C is lower than a loss tangent LTc of the cap layer 68 at 30°C and is higher than a loss tangent LTb of the base layer 72 at 30°C. The cap layer 68, the intermediate layer 70, and the base layer 72 are formed from crosslinked rubbers having different heat generation properties, respectively. Specifically, the cap layer 68 is most likely to generate heat, and the base layer 72 is least likely to generate heat. The intermediate layer 70 has heat generation properties between that of the cap layer 68 and that of the base layer 72.

In the tire 2, the intermediate layer 70 can contribute to suppressing heat generation in the tread 8. In the tread 8, heat generation is suppressed compared to the case where the tread 8 is composed of two layers that are the cap layer 68 and the base layer 72. In other words, when the tread 8 is composed of three layers that are the cap layer 68, the intermediate layer 70, and the base layer 72, heat generation in the tread 8 is effectively suppressed. The tire 2 can maintain good high-speed durability. From this viewpoint, it is preferable that the tread 8 includes the cap layer 68, the intermediate layer 70 located radially inward of the cap layer 68, and the base layer 72 located radially inward of the intermediate layer 70, and the loss tangent LTm of the intermediate layer 70 at 30°C is lower than the loss tangent LTc of the cap layer 68 at 30°C and is higher than the loss tangent LTb of the base layer 72 at 30°C.

As described above, in the tire 2, the loss tangent LTm of the intermediate layer 70 at 30°C is lower than the loss tangent LTc of the cap layer 68 at 30°C. Specifically, the ratio (LTm/LTc) of the loss tangent LTm of the intermediate layer 70 at 30°C to the loss tangent LTc of the cap layer 68 at 30°C is preferably 40% or more and 90% or less.

When the ratio (LTm/LTc) is set to 40% or more, the intermediate layer 70 can ensure the required stiffness. The tire 2 can maintain good steering stability. From this viewpoint, the ratio (LTm/LTc) is more preferably 50% or more and further preferably 60% or more.

When the ratio (LTm/LTc) is set to 90% or less, the intermediate layer 70 can effectively contribute to suppressing heat generation. The tire 2 can maintain good high-speed durability. From this viewpoint, the ratio (LTm/LTc) is more preferably 80% or less and further preferably 70% or less.

The loss tangent LTc of the cap layer 68 at 30°C is preferably 0.15 or more. This is because the cap layer 68 can contribute to improving steering stability. From this viewpoint, the loss tangent LTc is more preferably 0.16 or more and further preferably 0.17 or more. The cap layer 68 comes into contact with a road surface. From the viewpoint of improving steering stability, it is more preferable that the loss tangent LTc is higher. However, a high loss tangent LTc leads to heat generation. There is a concern that the heated cap layer 68 may raise the temperature of the intermediate layer 70 more than expected. From the viewpoint that the tire 2 can stably maintain the temperature state of the entire tread 8 and maintain good high-speed durability, the loss tangent LTc of the cap layer 68 at 30°C is preferably 0.30 or less, more preferably 0.28 or less, and further preferably 0.27 or less.

In the tire 2, from the viewpoint that the intermediate layer 70 can effectively contribute to improving high-speed durability, the loss tangent LTm of the intermediate layer 70 at 30°C is preferably 0.15 or less, more preferably 0.14 or less, and further preferably 0.13 or less. From the viewpoint of maintaining good steering stability, the loss tangent LTm of the intermediate layer 70 at 30°C is preferably 0.10 or more and more preferably 0.11 or more.

In the tire 2, the loss tangent LTb of the base layer 72 at 30°C is lower than the loss tangent LTm of the intermediate layer 70 at 30°C. Specifically, the loss tangent LTb of the base layer 72 at 30°C is preferably 0.10 or less. This is because the base layer 72 can effectively contribute to maintaining good high-speed durability. From this viewpoint, the loss tangent LTb of the base layer 72 is more preferably 0.09 or less. It is more preferable that the loss tangent LTb of the base layer 72 is lower, and thus a preferable lower limit is not set.

As is obvious from the above description, according to the present invention, the tire 2 that can achieve both quietness and high-speed durability is obtained.

EXAMPLES

Hereinafter, the present invention will be described in further detail by means of examples, etc., but the present invention is not limited to these examples.

[Examples 1 to 7 and Comparative Examples 1 and 2]

Tires (tire size = 245/35R20) of Examples 1 to 7 and Comparative Examples 1 and 2 having the basic structure shown in FIG. 1 and having specifications shown in Table 1 below were obtained.

The distance WCM in the axial direction from the equator plane to the boundary CM between the crown portion and the middle portion was set to 33% of the distance WA in the axial direction from the equator plane to the axially outer end PW of the tire.

The distance WMS in the axial direction from the equator plane to the boundary MS between the middle portion and the shoulder portion was set to 61% of the above-described distance WA in the axial direction.

An ether-based polyurethane sponge was used as the sound damper.

In Table 1, in the cells for "sound damper", "Y" indicates that the sound damper is provided, and "N" indicates that no sound damper is provided.

In the cells for "band cord", "N" indicates that a nylon fiber cord is used as the band cord, and "HB" indicates that a hybrid cord of an aramid fiber and a nylon fiber is used as the band cord.

In the cells for "band structure", "1F" indicates that the band is composed only of a full band, and "1F+1E" indicates that the band is composed of a full band and a pair of edge bands.

In Comparative Example 1, no sound damper is provided.

In Examples 1 to 4 and Comparative Examples 1 and 2, a two-layer tread is adopted as the tread. In Examples 5 to 7, a three-layer tread is adopted as the tread.

In Examples 1 to 5 and Comparative Examples 1 and 2, a nylon fiber cord is used as the band cord. In Examples 6 and 7, a hybrid cord of an aramid fiber and a nylon fiber is used as the band cord.

In Examples 1 to 6 and Comparative Examples 1 and 2, the band is composed only of a full band. In Example 7, the band is composed of a full band and a pair of edge bands.

[High-Speed Durability]

A test tire whose internal pressure was adjusted to 250 kPa was mounted on a drum tester, and the state of the internal structure of the tire after running at 120 km/h for 30000 km with a load of 6.6 kN applied to the tire was evaluated. The results are represented as indexes with the result of Comparative Example 1 being regarded as 100. A higher value indicates that the state of the internal structure of the tire is better and that the high-speed durability is better.

[Quietness]

A test tire whose internal pressure was adjusted to 250 kPa was mounted on a drum tester installed in an anechoic room, and the sound pressure was measured while the tire was running at 120 km/h with a load of 6.6 kN applied to the tire. Quietness was evaluated using an index where a value becomes higher as a cavity resonance sound peak value becomes lower. The results are represented as indexes with the result of Comparative Example 1 being regarded as 100. A higher value indicates that the cavity resonance sound peak value is lower and that the quietness is better.

[Table 1]

|  | Comp. Ex. 1 | Comp. Ex. 2 | Ex. 1 | Ex. 2 | Ex. 3 | Ex. 4 | Ex. 5 | Ex. 6 | Ex. 7 |
|---|---|---|---|---|---|---|---|---|---|
| Sound damper | N | Y | Y | Y | Y | Y | Y | Y | Y |
| TR1 [mm] | 800 | 800 | 1000 | 1500 | 1500 | 1500 | 1500 | 1500 | 1500 |
| WS/WCM [%] | - | 90 | 90 | 90 | 120 | 120 | 120 | 120 | 120 |
| WS/WMS [%] | - | 49 | 49 | 49 | 66 | 66 | 66 | 66 | 66 |
| TS [mm] | - | 20 | 20 | 20 | 20 | 30 | 30 | 30 | 30 |
| Number of layers of tread | 2 | 2 | 2 | 2 | 2 | 2 | 3 | 3 | 3 |
| Band cord | N | N | N | N | N | N | N | HB | HB |
| Band structure | 1F | 1F | 1F | 1F | 1F | 1F | 1F | 1F | 1F+1E |
| High-speed durability | 100 | 80 | 100 | 120 | 120 | 120 | 130 | 140 | 150 |
| Quietness | 80 | 100 | 100 | 100 | 110 | 120 | 120 | 120 | 120 |

As shown in Table 1, in each Example, both quietness and high-speed durability are achieved. From the evaluation results, advantages of the present invention are clear.

The above-described technology capable of achieving both quietness and high-speed durability can be applied to various tires.

[Additional Note]

The present invention includes aspects described below.

[1] A HIGH LOAD CAPACITY type tire specified in the ETRTO STANDARDS MANUAL 2021, the tire including a tire body and a sound damper made of a sponge material, wherein: the tire body includes a tread configured to come into contact with a road surface and a belt located radially inward of the tread and including a large number of belt cords aligned with each other; the sound damper is joined to an inner surface of the tire body on a radially inner side of the tread; an outer surface of the tread includes a crown portion located at a center in an axial direction, a pair of middle portions located axially outward of the crown portion, and a pair of shoulder portions located axially outward of the middle portions, respectively; a distance in the axial direction from an equator plane of the tire to a boundary between the crown portion and the middle portion is 30% or more and 40% or less of a distance in the axial direction from the equator plane to an axially outer end of the tire; a distance in the axial direction from the equator plane to a boundary between the middle portion and the shoulder portion is 55% or more and 65% or less of the distance in the axial direction from the equator plane to the axially outer end of the tire; an axially outer end of a joint surface between the sound damper and the tire body is located axially inward of the boundary between the middle portion and the shoulder portion; a distance in the axial direction from the equator plane to the axially outer end of the joint surface is 90% or more of the distance in the axial direction from the equator plane to the boundary between the crown portion and the middle portion; in a meridian cross-section of the tire, a contour of the crown portion is represented by an arc having a center on the equator plane, a contour of each middle portion is represented by an arc tangent to the arc representing the contour of the crown portion, and a contour of each shoulder portion is represented by an arc tangent to the arc representing the contour of the middle portion; a radius TR1 of the arc representing the contour of the crown portion is larger than a radius TR2 of the arc representing the contour of the middle portion; the radius TR2 of the arc representing the contour of the middle portion is larger than a radius TR3 of the arc representing the contour of the shoulder portion; and the radius TR1 of the arc representing the contour of the crown portion is 1000 mm or more.

[2] The tire according to [1] above, wherein a ratio TR2/TR1 of the radius TR2 of the arc representing the contour of the middle portion to the radius TR1 of the arc representing the contour of the crown portion is 0.45 or more and 0.55 or less.

[3] The tire according to [2] above, wherein a ratio TR3/TR1 of the radius TR3 of the arc representing the contour of the shoulder portion to the radius TR1 of the arc representing the contour of the crown portion is 0.05 or more and 0.15 or less.

[4] The tire according to any one of [1] to [3] above, wherein

the tread includes a cap layer, an intermediate layer located radially inward of the cap layer, and a base layer located radially inward of the intermediate layer, and

a loss tangent of the intermediate layer at 30°C is lower than a loss tangent of the cap layer at 30°C and is higher than a loss tangent of the base layer at 30°C.

[5] The tire according to any one of [1] to [4] above, further including a band located between the tread and the belt in a radial direction, wherein the band includes a band cord extending substantially in a circumferential direction.

**Claims**

1.  A HIGH LOAD CAPACITY type tire (2) specified in the ETRTO STANDARDS MANUAL 2021, the tire (2) comprising a tire body (4) and a sound damper (6) made of a sponge material, wherein

    the tire body (4) includes a tread (8) configured to come into contact with a road surface and a belt (18) located radially inward of the tread (8) and including a large number of belt cords aligned with each other,

    the sound damper (6) is joined to an inner surface (4N) of the tire body (4) on a radially inner side of the tread (8),

    an outer surface of the tread (8) includes a crown portion (60) located at a center in an axial direction, a pair of middle portions (62) located axially outward of the crown portion (60), and a pair of shoulder portions (64) located axially outward of the middle portions (62), respectively,

    a distance (WCM) in the axial direction from an equator plane (EL) of the tire (2) to a boundary (CM) between the crown portion (60) and the middle portion (62) is 30% or more and 40% or less of a distance (WA) in the axial direction from the equator plane (EL) to an axially outer end (PW) of the tire (2),

    a distance (WMS) in the axial direction from the equator plane (EL) to a boundary (MS) between the middle portion (62) and the shoulder portion (64) is 55% or more and 65% or less of the distance (WA) in the axial direction from the equator plane (EL) to the axially outer end (PW) of the tire (2),

    an axially outer end (PC) of a joint surface between the sound damper (6) and the tire body (4) is located axially inward of the boundary (MS) between the middle portion (62) and the shoulder portion (64),

    a distance (WS) in the axial direction from the equator plane (EL) to the axially outer end (PC) of the joint surface is 90% or more of the distance (WCM) in the axial direction from the equator plane (EL) to the boundary (CM) between the crown portion (60) and the middle portion (62),

    in a meridian cross-section of the tire (2),

    a contour of the crown portion (60) is represented by an arc having a center on the equator plane (EL),

    a contour of each middle portion (62) is represented by an arc tangent to the arc representing the contour of the crown portion (60), and

    a contour of each shoulder portion (64) is represented by an arc tangent to the arc representing the contour of the middle portion (62),

    a radius TR1 of the arc representing the contour of the crown portion (60) is larger than a radius TR2 of the arc representing the contour of the middle portion (62),

    the radius TR2 of the arc representing the contour of the middle portion (62) is larger than a radius TR3 of the arc representing the contour of the shoulder portion (64), and

    the radius TR1 of the arc representing the contour of the crown portion (60) is 1000 mm or more.

2.  The tire (2) according to claim 1, wherein a ratio TR2/TR1 of the radius TR2 of the arc representing the contour of the middle portion (62) to the radius TR1 of the arc representing the contour of the crown portion (60) is 0.45 or more and 0.55 or less.

3.  The tire (2) according to claim 2, wherein a ratio TR3/TR1 of the radius TR3 of the arc representing the contour of the shoulder portion (64) to the radius TR1 of the arc representing the contour of the crown portion (60) is 0.05 or more and 0.15 or less.

4.  The tire (2) according to any one of claims 1 to 3, wherein

the tread (8) includes a cap layer (68), an intermediate layer (70) located radially inward of the cap layer (68), and a base layer (72) located radially inward of the intermediate layer (70), and

a loss tangent (LTm) of the intermediate layer (70) at 30°C is lower than a loss tangent (LTc) of the cap layer (68) at 30°C and is higher than a loss tangent (LTb) of the base layer (72) at 30°C.

5. The tire (2) according to any one of claims 1 to 4, further comprising a band (20) located between the tread (8) and the belt (18) in a radial direction, wherein

the band (20) includes a band cord extending substantially in a circumferential direction.

**Fig. 1**

Fig. 2

**Fig. 3**

Europäisches
Patentamt

European
Patent Office

Office européen
des brevets

## EUROPEAN SEARCH REPORT

**Application Number**

EP 25 20 1437

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FR 3 144 773 A1 (MICHELIN & CIE [FR]) 12 July 2024 (2024-07-12) * claims 1-13; figures 1-10 * ----- | 1-5 | INV.<br>B60C3/04<br>B60C9/20<br>B60C9/22 |
| A | EP 1 577 123 A1 (SUMITOMO RUBBER IND [JP]) 21 September 2005 (2005-09-21) * claims 1-16; figures 1-19 * ----- | 1-5 | B60C11/00<br>B60C19/00 |
| A | JP 2024 005785 A (SUMITOMO RUBBER IND) 17 January 2024 (2024-01-17) * claims 1-5; figures 1-3; table 1 * ----- | 1-5 | |
| | | | **TECHNICAL FIELDS SEARCHED (IPC)** |
| | | | B60C |

The present search report has been drawn up for all claims

| Place of search | Date of completion of the search | Examiner |
|---|---|---|
| Munich | 4 February 2026 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 1437

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | | Publication date | Patent family member(s) | | Publication date |
|---|---|---|---|---|---|
| FR 3144773 | A1 | 12-07-2024 | CN | 120457035 A | 08-08-2025 |
| | | | EP | 4648975 A1 | 19-11-2025 |
| | | | FR | 3144773 A1 | 12-07-2024 |
| | | | WO | 2024149494 A1 | 18-07-2024 |
| EP 1577123 | A1 | 21-09-2005 | CN | 1669835 A | 21-09-2005 |
| | | | DE | 602004009533 T2 | 24-07-2008 |
| | | | EP | 1577123 A1 | 21-09-2005 |
| | | | EP | 1852279 A1 | 07-11-2007 |
| | | | US | 2005205183 A1 | 22-09-2005 |
| | | | US | 2007119533 A1 | 31-05-2007 |
| | | | US | 2010270101 A1 | 28-10-2010 |
| JP 2024005785 | A | 17-01-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007160979 A

**Non-patent literature cited in the description**

- ETRTO STANDARDS MANUAL. 2021